# EUROPEAN PATENT SPECIFICATION

(11) **EP 4 155 557 B1**
(45) Date of publication and mention of the grant of the patent: **16.10.2024**
(21) Application number: 22191857.6
(22) Date of filing: 24.08.2022
(51) Int. Cl.: F15B 19/00, F15B 15/28, G01D 5/14, G01P 3/50, F15B 15/22, F15B 15/20, G01D 5/00, G01B 7/00

(54) **FLUID PRESSURE CYLINDER COMPRISING A FLUID PRESSURE CYLINDER MOVEMENT TIME SENSOR**
FLUIDDRUCKZYLINDER UMFASSEND EINEN FLUIDDRUCKZYLINDERBEWEGUNGSZEITSENSOR
VÉRIN UTILISANT UN FLUIDE SOUS PRESSION COMPRENANT UN CAPTEUR DE TEMPS DE MOUVEMENT POUR LE VÉRIN UTILISANT UN FLUIDE SOUS PRESSION

(30) Priority: 22.09.2021 JP 2021153795
(43) Date of publication of application: 29.03.2023
(73) Proprietor: SMC Corporation, Tokyo 101-0021 (JP)
(72) Inventor: YAMAGISHI, Takeshi, Ibaraki, 300-2493 (JP)
(74) Representative: Keil & Schaafhausen Patentanwälte PartGmbB

(56) References cited:
- DE-A1- 102015 210 716
- JP-B2- 5 889 808
- US-A1- 2008 224 692

## Description

### BACKGROUND OF THE INVENTION

### FIELD OF THE INVENTION

The present invention relates to a fluid pressure cylinder comprising a sensor that measures a time required for a piston of the fluid pressure cylinder such as an air cylinder to move by a predetermined stroke.

### DESCRIPTION OF THE RELATED ART

Conventionally, a fluid pressure cylinder equipped with a sensor for detecting a magnetic force of a magnet mounted on a piston, and detecting a position of the piston has been known.

For example, in JP 5889808 B2, a fluid pressure cylinder position detecting device is disclosed in which a pair of magnets are mounted on a piston, and two proximity switches are arranged on an outer side of a cylinder tube. In such a fluid pressure cylinder position detecting device, by using a pair of magnets with the same poles facing toward each other, the peak of a magnetic force to be detected is made larger.

DE 10 2015 210716 A1 describes a fluid pressure cylinder movement time sensor for measuring a time required for a piston to move a piston by a predetermined stroke. The sensor includes a magnetic sensor for detecting magnetic flux of a magnet mounted on the piston.

### SUMMARY OF THE INVENTION

However, the above-described fluid pressure cylinder position detecting device requires two proximity sensors (magnetic sensors). In general, if there are a plurality of positions of the sensor to be detected, it becomes necessary for a number of magnetic sensors corresponding thereto to be provided. Accordingly, in the case of measuring the time required for the piston to move from a predetermined first position to a predetermined second position, two magnetic sensors are required.

The present invention has the object of solving the aforementioned problem.

A fluid pressure cylinder according to claim 1 of the invention comprises a piston and a fluid pressure cylinder movement time sensor, the fluid pressure cylinder movement time sensor comprising a single magnetic sensor configured to detect a magnetic flux density of a magnet mounted on the piston, the fluid pressure cylinder movement time sensor being configured to measure a time required for the piston to move by a predetermined stroke, wherein: the magnet is arranged so that a direction of magnetization thereof coincides with a direction of movement of the piston, and the magnetic sensor is configured to detect the magnetic flux density in a direction perpendicular to the direction of movement of the piston; and the fluid pressure cylinder movement time sensor is configured to monitor a relationship between a position of the magnet along the direction of movement of the piston and the magnetic flux density detected by the magnetic sensor, the relationship being represented by a curve including a positive local maximum value and a negative local minimum value, the fluid pressure cylinder movement time sensor being configured to define a positive value smaller than the positive local maximum value as a first threshold value, and a negative value larger than the negative local minimum value as a second threshold value, a point in time at which the magnetic flux density detected by the magnetic sensor exceeds or falls below the first threshold value as one of a starting point or an end point, a point in time at which the magnetic flux density detected by the magnetic sensor exceeds or falls below the second threshold value as another one of the starting point or the end point, and the fluid pressure cylinder movement time sensor measures a time from the starting point to the end point.

According to the above-described fluid pressure cylinder movement time sensor, the magnetic flux density detected by a single uniaxial magnetic sensor is compared with the first threshold value and the second threshold value, whereby the starting point and the end point when the piston moves by the predetermined stroke can be determined.

The fluid pressure cylinder movement time sensor according to the present invention is capable of determining the starting point and the end point based on the magnetic flux density detected by such a single uniaxial magnetic sensor. Accordingly, using a magnetic sensor having a simple configuration, it is possible to measure the time required for the piston to move by the predetermined stroke.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a diagram showing a basic configuration of a fluid pressure cylinder equipped with a fluid pressure cylinder movement time sensor according to the present invention;
FIG. 2 is a diagram showing a relationship between a piston position in the fluid pressure cylinder of FIG. 1 and a detected magnetic flux density;
FIG. 3 is a diagram in order to describe a method for determining a starting point and an end point using threshold values of a magnetic flux density;
FIG. 4 is a diagram in order to describe a method for setting determination conditions for the starting point and the end point;
FIG. 5 is a diagram in order to describe a first mode of use of the fluid pressure cylinder movement time sensor of the fluid pressure cylinder according to the present invention;
FIG. 6 is a diagram in order to describe a second mode of use of the fluid pressure cylinder movement time sensor of the fluid pressure cylinder according to the present invention; and
FIG. 7 is a diagram in order to describe a third mode of use of the fluid pressure cylinder movement time sensor of the fluid pressure cylinder according to the present invention.

### DESCRIPTION OF THE INVENTION

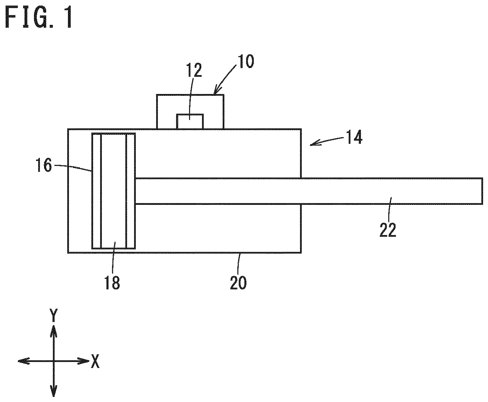

A basic configuration of a fluid pressure cylinder 14 equipped with a fluid pressure cylinder movement time sensor 10 according to an embodiment of the present invention is shown in FIG. 1. A permanent magnet (magnet) 18 is mounted on a piston 16 of the fluid pressure cylinder 14. A direction of magnetization of the permanent magnet 18 coincides with a direction of movement (X direction) of the piston 16. The fluid pressure cylinder movement time sensor 10 is equipped with a magnetic sensor 12 capable of detecting a magnetic flux density of the permanent magnet 18, and is arranged on an outer side of a cylinder tube 20 of the fluid pressure cylinder 14.

The magnetic sensor 12 is a uniaxial magnetic sensor constituted from a Hall IC or the like. The magnetic sensor 12 detects a magnetic flux density in a direction (Y direction) perpendicular to the direction of movement of the piston 16, and does not detect a magnetic flux density in the direction of movement of the piston 16. The fluid pressure cylinder movement time sensor 10 including the magnetic sensor 12 is attached to the cylinder tube 20 in a state in which the position thereof along the longitudinal direction (X direction) of the cylinder tube 20 can be adjusted. The fluid pressure cylinder movement time sensor 10 includes a control unit, a computation unit, a storage unit, and the like, which are constituted from a non-illustrated circuit board.

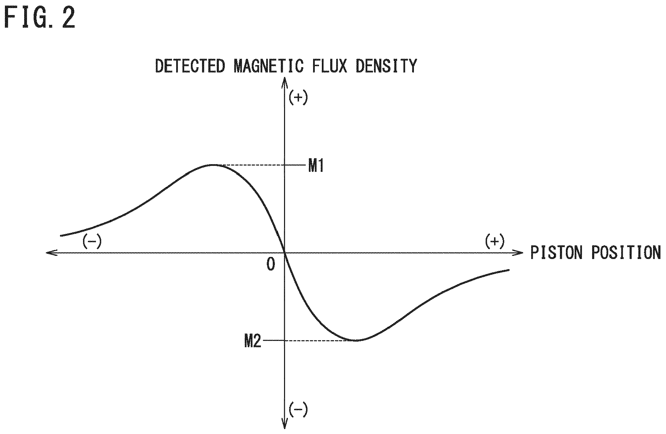

A relationship between the position of the permanent magnet 18 along the direction of movement of the piston 16 and the magnetic flux density detected by the magnetic sensor 12 is shown in FIG. 2. Hereinafter, the position of the permanent magnet 18 along the direction of movement of the piston 16 is referred to as a "piston position". Further, the magnetic flux density detected by the magnetic sensor 12 is referred to as a "detected magnetic flux density". The piston position when the detected magnetic flux density is zero is set to zero.

In a negative region of the piston position, when the piston 16 departs from a position located far away from the origin and moves until reaching the origin, the detected magnetic flux density becomes gradually larger within a range of positive values, and after having assumed a local maximum value M1, decreases in a substantially linear manner to zero. In a positive region of the piston position, when the piston 16 departs from a position located far away from the origin and moves until reaching the origin, the detected magnetic flux density becomes gradually smaller within a range of negative values, and after having assumed a local minimum value M2, increases in a substantially linear manner to zero.

The detected magnetic flux density changes in a substantially linear manner between a vicinity of the local maximum value and a vicinity of the local minimum value. According to the present invention, for the sake of convenience, the relationship between the piston position and the detected magnetic flux density is represented by a curve in which the linearly changing portion is included. The curve representing the relationship between the piston position and the detected magnetic flux density is symmetrical with respect to the origin. Moreover, in FIG. 2, the detected magnetic flux density assumes positive values in the negative region of the piston position, and the detected magnetic flux density assumes negative values in the positive region of the piston position. In the case that the directions of the magnetic poles of the permanent magnet 18 are reversed, the detected magnetic flux density assumes negative values in the negative region of the piston position, and the detected magnetic flux density assumes positive values in the positive region of the piston position. Hereinafter, although a description is given on the basis of the curve shown in FIG. 2, the same situation also applies in a case in which the directions of the magnetic poles of the permanent magnet 18 are reversed.

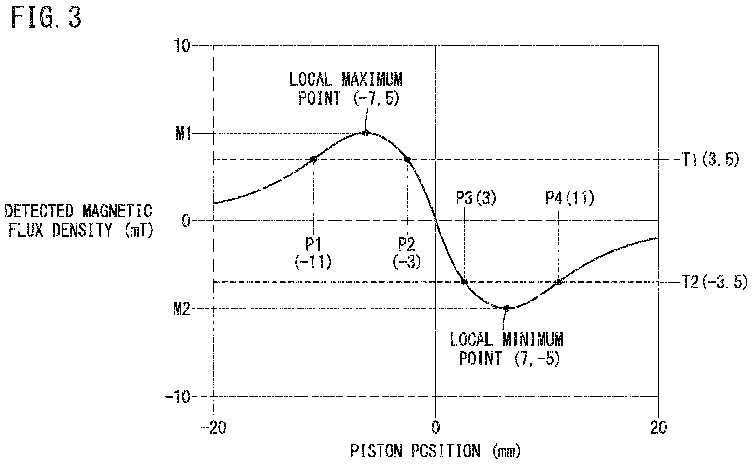

The fluid pressure cylinder of the present invention comprises a sensor that measures the time required for the piston 16 to move by a predetermined stroke (hereinafter, referred to as a "movement time (or stroke time) of the piston 16"). It is important how to determine the starting point and the end point on a time axis when the piston 16 moves by the predetermined stroke. Hereinafter, with reference to FIG. 3, a description will be given of a method for determining the starting point and the end point using two threshold values of the magnetic flux density.

In FIG. 3, a relationship between the piston position and the detected magnetic flux density is shown with specific numerical values, and two threshold values concerning the magnetic flux density are also shown. In the example shown in FIG. 3, when the piston position is -7 mm (millimeters), the detected magnetic flux density becomes a local maximum, and a local maximum value M1 is 5 mT (millitesla). Further, when the piston position is 7 mm, the detected magnetic flux density becomes a local minimum, and a local minimum value M2 is -5 mT. The absolute value of the local minimum value M2 is equivalent to the absolute value of the local maximum value M1.

A positive value that is smaller than the local maximum value M1 is set as a first threshold value T1, and a negative value that is larger than the local maximum value M2 is set as a second threshold value T2. The absolute value of the second threshold value T2 may be the same value as the absolute value of the first threshold value T1, or may be a value that differs from the absolute value of the first threshold value T1. In the example shown in FIG. 3, the first threshold value T1 is 3.5 mT, the second threshold value T2 is -3.5 mT, and the absolute value of the second threshold value T2 is equivalent to the absolute value of the first threshold value T1.

Before and after the piston position at which the detected magnetic flux density becomes the local maximum, the detected magnetic flux density becomes equivalent to the first threshold value T1. More specifically, when the piston position is a first position P1 and a second position P2, the detected magnetic flux density becomes equivalent to the first threshold value T1. Further, before and after the piston position at which the detected magnetic flux density becomes the local minimum, the detected magnetic flux density becomes equivalent to the second threshold value T2. More specifically, when the piston position is a third position P3 and a fourth position P4, the detected magnetic flux density becomes equivalent to the second threshold value T2. In the example shown in FIG. 3, the first position P1 is -11 mm, the second position P2 is -3 mm, the third position P3 is 3 mm, and the fourth position P4 is 11 mm.

First, a case will be considered in which the piston 16 moves from the negative region toward the positive region of the piston position. As noted previously, although the detected magnetic flux density is equivalent to the first threshold value T1 at the two piston positions of the first position P1 and the second position P2, at which one of these two piston positions, the detected magnetic flux density has become equivalent to the first threshold value T1, can be determined by monitoring a change in the detected magnetic flux density. More specifically, when the detected magnetic flux density has changed from a state of being smaller than the first threshold value T1 to a state of being larger than the first threshold value T1, it can be determined that the piston 16 has passed through the first position P1. When the detected magnetic flux density has changed from a state of being larger than the first threshold value T1 to a state of being smaller than the first threshold value T1, it can be determined that the piston 16 has passed through the second position P2.

Further, although the detected magnetic flux density is equivalent to the second threshold value T2 at the two piston positions of the third position P3 and the fourth position P4, at which one of these two piston positions, the detected magnetic flux density has become equivalent to the second threshold value T2, can be determined by monitoring a change in the detected magnetic flux density. More specifically, when the detected magnetic flux density has changed from a state of being larger than the second threshold value T2 to a state of being smaller than the second threshold value T2, it can be determined that the piston 16 has passed through the third position P3. When the detected magnetic flux density has changed from a state of being smaller than the second threshold value T2 to a state of being larger than the second threshold value T2, it can be determined that the piston 16 has passed through the fourth position P4.

Since the piston 16 moves from the negative region toward the positive region, a point in time at which the piston 16 has passed through the first position P1, or alternatively, a point in time at which the piston 16 has passed through the second position P2 is determined to be the starting point. A point in time at which the piston 16 has passed through the third position P3, or alternatively, a point in time at which the piston 16 has passed through the fourth position P4 is determined to be the end point. Then, by measuring the time from the starting point to the end point, the movement time of the piston 16 can be measured.

A combination of the aforementioned two starting points and the aforementioned two end points is arbitrary, and there are a total of four of such combinations. From among the four combinations, in the case that the first position P1 is the starting point and the fourth position P4 is the end point, the distance between the piston position at the starting point and the piston position at the end point becomes maximum. Further, from among the four combinations, in the case that the second position P2 is the starting point and the third position P3 is the end point, the distance between the piston position at the starting point and the piston position at the end point becomes minimum. Hereinafter, the piston position at the starting point is referred to as a "starting point position", and the piston position at the end point is referred to as an "end point position".

Next, a case will be considered in which the piston 16 moves from the positive region toward the negative region of the piston position. Although the detected magnetic flux density is equivalent to the second threshold value T2 at the two piston positions of the fourth position P4 and the third position P3, at which one of these two piston positions, the detected magnetic flux density has become equivalent to the second threshold value T2, can be determined by monitoring a change in the detected magnetic flux density. More specifically, when the detected magnetic flux density has changed from a state of being larger than the second threshold value T2 to a state of being smaller than the second threshold value T2, it can be determined that the piston 16 has passed through the fourth position P4. When the detected magnetic flux density has changed from a state of being smaller than the second threshold value T2 to a state of being larger than the second threshold value T2, it can be determined that the piston 16 has passed through the third position P3.

Further, although the detected magnetic flux density is equivalent to the first threshold value T1 at the two piston positions of the second position P2 and the first position P1, at which one of these two piston positions, the detected magnetic flux density has become equivalent to the first threshold value T1, can be determined by monitoring a change in the detected magnetic flux density. More specifically, when the detected magnetic flux density has changed from a state of being smaller than the first threshold value T1 to a state of being larger than the first threshold value T1, it can be determined that the piston 16 has passed through the second position P2. When the detected magnetic flux density has changed from a state of being larger than the first threshold value T1 to a state of being smaller than the first threshold value T1, it can be determined that the piston 16 has passed through the first position P1.

Since the piston 16 moves from the positive region toward the negative region, a point in time at which the piston 16 has passed through the fourth position P4, or alternatively, a point in time at which the piston 16 has passed through the third position P3 is determined to be the starting point. A point in time at which the piston 16 has passed through the second position P2, or alternatively, a point in time at which the piston 16 has passed through the first position P1 is determined to be the end point. Then, by measuring the time from the starting point to the end point, the movement time of the piston 16 can be measured.

A combination of the aforementioned two starting points and the aforementioned two end points is arbitrary, and there are a total of four of such combinations. From among the four combinations, in the case that the fourth position P4 is the starting point and the first position P1 is the end point, the distance between the piston position at the starting point and the piston position at the end point becomes maximum. Further, from among the four combinations, in the case that the third position P3 is the starting point and the second position P2 is the end point, the distance between the piston position at the starting point and the piston position at the end point becomes minimum.

Next, a description will be given concerning a method for setting determination conditions for the starting point and the end point including the first threshold value T1 and the second threshold value T2, in the case that the starting point position and the end point position are specified. It is taken as a premise that the magnetic sensor 12 is arranged between the specified starting point position and the specified end point position.

The fluid pressure cylinder 14 is driven, whereby the piston 16 is actually moved from the specified starting point position to the specified end point position, and the detected magnetic flux density is monitored. Moreover, although the starting point position and the end point position are piston positions, such positions can be easily understood, for example, when the position of an end portion of a piston rod 22 that extends to the exterior from the cylinder tube 20 is considered, instead of the piston position.

The sign of the detected magnetic flux density at the specified end point position differs from the sign of the detected magnetic flux density at the specified starting point position. Hereinafter, explanations will be provided separately for a case in which the former detected magnetic flux density is a positive value and the latter detected magnetic flux density is a negative value, and a case in which the former detected magnetic flux density is a negative value and the latter detected magnetic flux density is a positive value.

In the case that the detected magnetic flux density at the specified starting point position is a positive value and the detected magnetic flux density at the specified end point position is a negative value, the former is set as the first threshold value T1, and the latter is set as the second threshold value T2. If the detected magnetic flux density has increased immediately after the piston 16 has separated away from the specified starting point position, a condition that "the detected magnetic flux density exceeds the first threshold value T1" is set as the determination condition for the starting point. If the detected magnetic flux density has decreased immediately after the piston 16 has separated away from the specified starting point position, a condition that "the detected magnetic flux density falls below the first threshold value T1" is set as the determination condition for the starting point.

Further, if the piston 16 has reached the specified end point position while the detected magnetic flux density is decreasing, a condition that "the detected magnetic flux density falls below the second threshold value T2" is set as the determination condition for the end point. If the piston 16 has reached the specified end point position while the detected magnetic flux density is increasing, a condition that "the detected magnetic flux density exceeds the second threshold value T2" is set as the determination condition for the end point.

On the other hand, in the case that the detected magnetic flux density at the specified starting point position is a negative value and the detected magnetic flux density at the specified end point position is a positive value, the former is set as the second threshold value T2, and the latter is set as the first threshold value T1. If the detected magnetic flux density has decreased immediately after the piston 16 has separated away from the specified starting point position, a condition that "the detected magnetic flux density falls below the second threshold value T2" is set as the determination condition for the starting point. If the detected magnetic flux density has increased immediately after the piston 16 has separated away from the specified starting point position, a condition that "the detected magnetic flux density exceeds the second threshold value T2" is set as the determination condition for the starting point.

Further, if the piston 16 has reached the specified end point position while the detected magnetic flux density is increasing, a condition that "the detected magnetic flux density exceeds the first threshold value T1" is set as the determination condition for the end point. If the piston 16 has reached the specified end point position while the detected magnetic flux density is decreasing, a condition that "the detected magnetic flux density falls below the first threshold value T1" is set as the determination condition for the end point.

In this manner, the determination conditions for the starting point and the end point can be obtained by actually moving the piston 16 from the specified starting point position to the specified end point position, and monitoring the detected magnetic flux density. Including the first threshold value T1 and the second threshold value T2, these determination conditions for the starting point and the end point are stored in the storage unit or the control unit of the fluid pressure cylinder movement time sensor 10. Consequently, thereafter, the movement time of the piston 16 can be easily calculated in the computation unit of the fluid pressure cylinder movement time sensor 10.

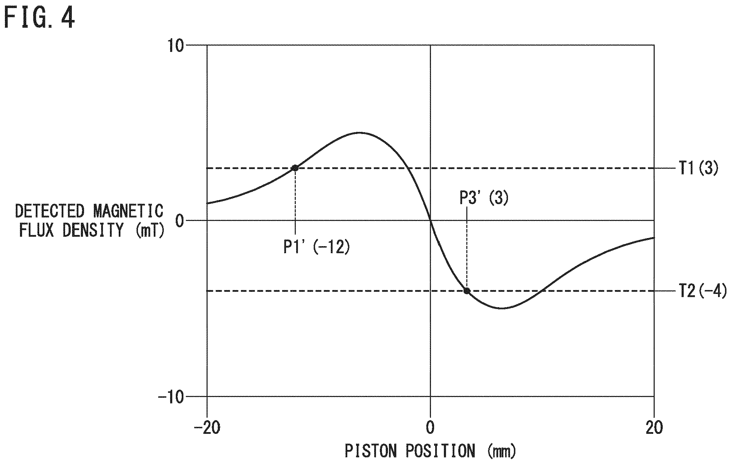

While referring to FIG. 4, a specific example will be described of setting the determination conditions for the starting point and the end point according to the above-described method. As the starting point position, P1' (-12 mm), which corresponds to the aforementioned first position P1, is specified by a user. Further, as the end point position, P3' (3 mm), which corresponds to the aforementioned third position P3, is specified by the user. When designating the positions P1' and P3', the user does not need to be aware of their numerical values, and for example, the user may simply specify two locations of the end portion of the piston rod 22. However, it is necessary that the magnetic sensor 12 be arranged at least between the positions P1' and P3'.

The piston 16 was actually moved from the position P1' to the position P3', and the detected magnetic flux density was monitored. It was monitored that the detected magnetic flux density was 3 mT when the piston position was the position P1', and the detected magnetic flux density exceeded 3 mT immediately after the piston 16 separated away from the position P1'. In this case, the first threshold value T1 is set to 3 mT, and a condition that "the detected magnetic flux density exceeds the first threshold value T1" is set as the determination condition for the starting point. Further, it was monitored that the detected magnetic flux density when the piston position was the position P3' was -4 mT, and the piston 16 reached the position P3' while the detected magnetic flux density was decreasing. In this case, the second threshold value T2 is set to -4 mT, and a condition that "the detected magnetic flux density falls below the second threshold value T2" is set as the determination condition for the end point.

In the case that there are a plurality of sets of the specified starting point position and the specified end point position, the determination conditions for the starting points and the end points are set for each of such sets. For example, a case may be presented in which it is desired to measure not only the time required for the piston 16 to move by the predetermined stroke in one direction, but also to measure the time required for the piston 16 to move by the same stroke in the opposite direction.

It is also possible to obtain the piston speed (an average value of the piston speed) on the basis of the movement time of the piston 16. More specifically, the reciprocal of the movement time of the piston 16 is multiplied by a constant corresponding to the distance from the starting point position to the end point position. According to this method, the piston speed can be calculated by the computation unit of the fluid pressure cylinder movement time sensor 10. Further, if the piston speed is obtained for a plurality of continuous segments, then a change in the piston speed can be detected.

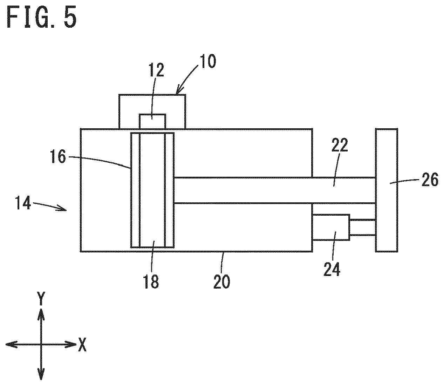

Next, while referring to FIG. 5, a description will be given concerning a first mode of use of the fluid pressure cylinder movement time sensor 10 of the fluid pressure cylinder according to the present invention. The first mode of use is a mode that is used to determine whether or not a buffering action of a shock absorber 24 that serves to decelerate the piston 16 is appropriate. Moreover, in FIG. 5, the same or equivalent members as those in the basic configuration shown in FIG. 1 are designated by the same reference numerals.

In the example shown in FIG. 5, the shock absorber 24 is a fluid type shock absorber, which exerts a buffering action in the vicinity of a stroke end of the piston 16 when the piston rod 22 is pulled in. The magnetic sensor 12 is arranged at a position where it is capable of effectively detecting a change in the magnetic flux density of the permanent magnet 18 that is mounted on the piston 16 in the vicinity of the stroke end. Determination conditions for the starting point and the end point are appropriately set, and the movement time of the piston 16 is measured. Moreover, reference numeral 26 indicates an end plate that is fixed to the end portion of the piston rod 22.

In the case that the buffering action by the shock absorber 24 is appropriate, the movement time of the piston 16 lies within a range of a reference time period defined by a predetermined upper limit value and a predetermined lower limit value. On the other hand, in the case that the buffering action of the shock absorber 24 is too strong, the movement time of the piston 16 becomes longer than the upper limit value. Further, in the case that the buffering action of the shock absorber 24 is too weak, the movement time of the piston 16 becomes shorter than the lower limit value. When the movement time of the piston 16 lies outside of the reference time period, it can be determined that the buffering action of the shock absorber 24 is either too strong or too weak. Then, a notification is issued to the user that the shock absorber 24 needs to be adjusted.

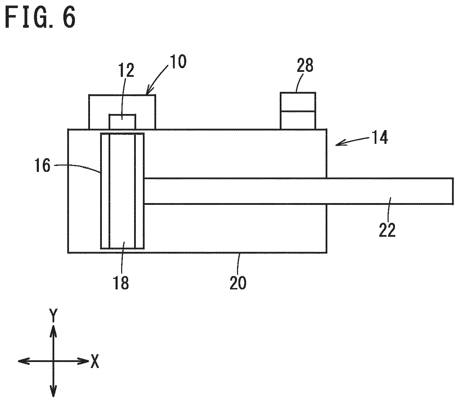

Next, while referring to FIG. 6, a description will be given concerning a second mode of use of the fluid pressure cylinder movement time sensor 10 of the fluid pressure cylinder according to the present invention. The second mode of use is a mode that is used to obtain the piston speed on the basis of the movement time of the piston 16 in order for the user to adjust a speed controller 28 provided in the fluid pressure cylinder 14. Moreover, in FIG. 6, the same or equivalent members as those in the basic configuration shown in FIG. 1 are designated by the same reference numerals.

In the example shown in FIG. 6, the speed controller 28 is a meter-out variable throttle valve, which throttles the flow rate of the air discharged at a time when the piston rod 22 of the fluid pressure cylinder 14 is pushed out. The speed controller 28 is arranged in a discharge port (not shown) of the fluid pressure cylinder 14. The magnetic sensor 12 is arranged at a position where it is capable of detecting a change in the magnetic flux density of the permanent magnet 18 that is mounted on the piston 16 when the piston rod 22 is pushed out. Determination conditions for the starting point and the end point are appropriately set, and the movement time of the piston 16 is measured.

Using a constant corresponding to the distance from the starting point position to the end point position, the movement time of the piston 16 is converted into a piston speed, and the piston speed is displayed on a display (not shown). The user observes the displayed piston speed, and in the case that the piston speed deviates from a desired value, the user manually operates the speed controller 28, and adjusts a flow path area for the air.

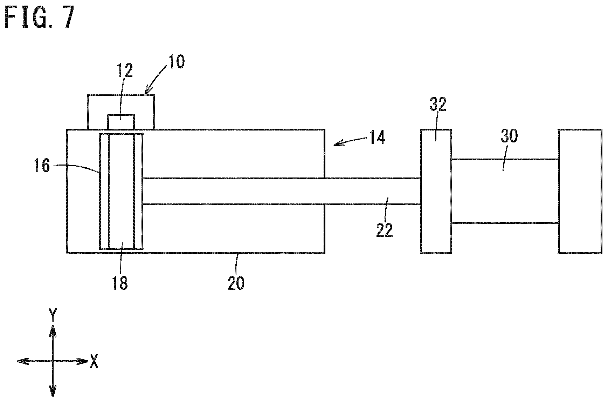

Next, while referring to FIG. 7, a description will be given concerning a third mode of use of the fluid pressure cylinder movement time sensor 10 of the fluid pressure cylinder according to the present invention. The third mode of use is a mode that is used to detect that an elastic body 30 has been clamped in the fluid pressure cylinder 14, which clamps the elastic body 30 while compressing the elastic body 30. Moreover, in FIG. 7, the same or equivalent members as those in the basic configuration shown in FIG. 1 are designated by the same reference numerals.

In the example shown in FIG. 7, when the piston 16 is driven by a predetermined amount in a direction to push the piston rod 22 out, an end plate 32 that is fixed to the end portion of the piston rod 22 comes into contact with the elastic body 30. When the piston rod 22 comes into contact with the elastic body 30, the piston rod 22 receives a reaction force from the elastic body 30, and the piston speed is decelerated. The magnetic sensor 12 is arranged at a position where it is capable of detecting a change in the magnetic flux density of the permanent magnet 18 that is mounted on the piston 16, within a range in which at least a position where the piston rod 22 comes into contact with the elastic body 30 is included.

Determination conditions are set for a plurality of sets of the starting point and the end point so that the piston speed can be obtained for a plurality of continuous segments, and the time required for the piston 16 to move in each of such segments is measured. Then, using a constant corresponding to the distance of each of such segments, the time required for the piston 16 to move in each of the segments is converted into the piston speed. When the piston speed is significantly reduced in adjacent segments, it can be determined that the elastic body 30 has been clamped by the fluid pressure cylinder 14.

In addition to the first to third modes of use, various other modes of use of the fluid pressure cylinder movement time sensor 10 of the fluid pressure cylinder according to the present invention may be considered. For example, a mode may be considered that is used in the case that the movement time of the piston 16 is compared with the reference time period, and when the movement time of the piston 16 deviates from the reference time period, a notification is issued to the user that some type of abnormality has occurred. The cause of the abnormality can be assumed in accordance with the mode of use of the fluid pressure cylinder 14. For example, in the case that transportation is carried out by the fluid pressure cylinder 14, since there is a high likelihood that foreign matter being caught therein or dropping of the transported object will become a cause of the abnormality, a notification to that effect may be issued to the user.

Further, a mode may also be considered that is used in the case that the number of times that the movement time of the piston 16 is measured is counted, and when the cumulative number of times exceeds a predetermined value, the user is prompted to carry out necessary maintenance. In general, since the useful lifetime of the fluid pressure cylinder 14 frequently depends on sliding portions, which are constituted from a sealing material or the like, the user may be prompted to carry out maintenance of the sliding portions.

## Claims

1. A fluid pressure cylinder (14) comprising a piston (16) and a fluid pressure cylinder movement time sensor (10), the fluid pressure cylinder movement time sensor (10) comprising a single magnetic sensor (12) configured to detect a magnetic flux density of a magnet (18) mounted on the piston (16), the fluid pressure cylinder movement time sensor being configured to measure a time required for the piston to move by a predetermined stroke, wherein:
the magnet is arranged so that a direction of magnetization thereof coincides with a direction of movement of the piston (16), and the magnetic sensor is configured to detect the magnetic flux density in a direction perpendicular to the direction of movement of the piston (16); and
the fluid pressure cylinder movement time sensor (10) is configured to monitor a relationship between a position of the magnet along the direction of movement of the piston (16) and the magnetic flux density detected by the magnetic sensor (12), the relationship being represented by a curve including a positive local maximum value (M1) and a negative local minimum value (M2),
the fluid pressure cylinder movement time sensor (10) being configured to define a positive value smaller than the positive local maximum value (M1) as a first threshold value (T1), and a negative value larger than the negative local minimum value (M2) as a second threshold value (T2), a point in time at which the magnetic flux density detected by the magnetic sensor (12) exceeds or falls below the first threshold value (T1) as one of a starting point or an end point, a point in time at which the magnetic flux density detected by the magnetic sensor (12) exceeds or falls below the second threshold value (T2) as another one of the starting point or the end point, and the fluid pressure cylinder movement time sensor (10) measures a time from the starting point to the end point.

2. The fluid pressure cylinder according to claim 1, wherein the fluid pressure cylinder movement time sensor (10) is configured such that, when the piston (16) is moved from a specified starting point position to a specified end point position, the magnetic flux density detected at the specified starting point position is defined as one of the first threshold value (T1) or the second threshold value (T2), the magnetic flux density detected at the specified end point position is defined as another one of the first threshold value (T1) or the second threshold value (T2), a determination condition for the starting point is set depending on whether the magnetic flux density is increased or decreased immediately after the piston (16) has separated away from the specified starting point position, and a determination condition for the end point is set depending on whether the piston (16) has reached the specified end point position while the magnetic flux density is increasing or the piston (16) has reached the specified end point position while the magnetic flux density is decreasing.

3. The fluid pressure cylinder according to claim 1, wherein the fluid pressure cylinder movement time sensor (10) is configured to calculate a piston speed by multiplying a reciprocal of the measured time from the starting point to the end point by a constant corresponding to a distance from a starting point position to an end point position.

4. The fluid pressure cylinder according to claim 3, wherein the fluid pressure cylinder movement time sensor (10) is configured to calculate the piston speed for a plurality of continuous segments.

## Patentansprüche

1. Fluiddruckzylinder (14), der einen Kolben (16) und einen Fluiddruckzylinder-Bewegungszeitsensor (10) umfasst, wobei der Fluiddruckzylinder-Bewegungszeitsensor (10) einen einzelnen Magnetsensor (12) umfasst, der so konfiguriert ist, dass er eine magnetische Flussdichte eines am Kolben (16) angebrachten Magneten (18) erfasst, wobei der Fluiddruckzylinder-Bewegungszeitsensor so konfiguriert ist, dass er eine Zeit misst, die der Kolben benötigt, um sich um einen vorgegebenen Hub zu bewegen, wobei:
der Magnet so angeordnet ist, dass eine Richtung seiner Magnetisierung mit einer Bewegungsrichtung des Kolbens (16) zusammenfällt, und der Magnetsensor so konfiguriert ist, dass er die magnetische Flussdichte in einer Richtung senkrecht zur Bewegungsrichtung des Kolbens (16) erfasst; und
der Fluiddruckzylinder-Bewegungszeitsensor (10) konfiguriert ist, um eine Beziehung zwischen einer Position des Magneten entlang der Bewegungsrichtung des Kolbens (16) und der durch den Magnetsensor (12) erfassten magnetischen Flussdichte zu überwachen, wobei die Beziehung durch eine Kurve dargestellt wird, die einen positiven lokalen Maximalwert (M1) und einen negativen lokalen Minimalwert (M2) enthält,
der Fluiddruck-Zylinderbewegungszeitsensor (10) so konfiguriert ist, dass er einen positiven Wert, der kleiner als der positive lokale Maximalwert (M1) ist, als einen ersten Schwellenwert (T1) und einen negativen Wert, der größer als der negative lokale Minimalwert (M2) ist, als einen zweiten Schwellenwert (T2) definiert, einen Zeitpunkt, zu dem die von dem magnetischen Sensor (12) erfasste magnetische Flussdichte den ersten Schwellenwert (T1) überschreitet oder unterschreitet, als einen Startpunkt oder einen Endpunkt definiert, einen Zeitpunkt, zu dem die von dem magnetischen Sensor (12) erfasste magnetische Flussdichte den zweiten Schwellenwert (T2) über- oder unterschreitet, als einen anderen des Startpunkts oder des Endpunkts definiert, und wobei der Fluiddruck-Zylinderbewegungszeitsensor (10) eine Zeit von dem Startpunkt bis zu dem Endpunkt misst.

2. Fluiddruckzylinder nach Anspruch 1, wobei der Fluiddruckzylinder-Bewegungszeitsensor (10) so konfiguriert ist, dass
Wenn der Kolben (16) von einer spezifizierten Startpunktposition zu einer spezifizierten Endpunktposition bewegt wird, die an der spezifizierten Startpunktposition erfasste magnetische Flussdichte als einer des ersten Schwellenwerts (T1) oder des zweiten Schwellenwerts (T2) definiert ist, die an der spezifizierten Endpunktposition erfasste magnetische Flussdichte als ein anderer des ersten Schwellenwerts (T1) oder des zweiten Schwellenwerts (T2) definiert ist, eine Bestimmungsbedingung für den Startpunkt in Abhängigkeit davon gesetzt wird, ob die magnetische Flussdichte unmittelbar nachdem sich der Kolben (16) von der spezifizierten Startpunktposition entfernt hat, zunimmt oder abnimmt, und eine Bestimmungsbedingung für den Endpunkt in Abhängigkeit davon gesetzt wird, ob der Kolben (16) die spezifizierte Endpunktposition erreicht hat, während die magnetische Flussdichte zunimmt, oder der Kolben (16) die spezifizierte Endpunktposition erreicht hat, während die magnetische Flussdichte abnimmt.

3. Fluiddruckzylinder nach Anspruch 1, wobei der Fluiddruckzylinder-Bewegungszeitsensor (10) dazu konfiguriert ist, eine Kolbengeschwindigkeit durch Multiplikation des Kehrwerts der gemessenen Zeit vom Startpunkt bis zum Endpunkt mit einer Konstante zu berechnen, die einem Abstand von einer Startpunktposition zu einer Endpunktposition entspricht.

4. Fluiddruckzylinder nach Anspruch 3, wobei der Fluiddruckzylinder-Bewegungszeitsensor (10) dazu konfiguriert ist, die Kolbengeschwindigkeit für eine Vielzahl von kontinuierlichen Segmenten zu berechnen.

## Revendications

1. Vérin hydraulique (14) comprenant un piston (16) et un capteur de temps de mouvement de vérin hydraulique (10), le capteur de temps de mouvement de vérin hydraulique (10) comprenant un seul capteur magnétique (12) configuré pour détecter une densité de flux magnétique d'un aimant (18) monté sur le piston (16), le capteur de temps de mouvement de vérin hydraulique étant configuré pour mesurer un temps nécessaire au piston pour se déplacer selon une course prédéterminée, dans lequel :
l'aimant est conçu de telle façon qu'une direction de magnétisation de celui-ci coïncide avec une direction de déplacement du piston (16), et le capteur magnétique est configuré pour détecter la densité de flux magnétique dans une direction perpendiculaire à la direction de déplacement du piston (16) ; et
le capteur de temps de mouvement de vérin hydraulique (10) est configuré pour surveiller une relation entre une position de l'aimant le long de la direction de déplacement du piston (16) et la densité de flux magnétique détectée par le capteur magnétique (12), la relation étant représentée par une courbe incluant une valeur maximale locale positive (M1) et une valeur minimale locale négative (M2),
le capteur de temps de mouvement de vérin hydraulique (10) étant configuré pour définir une valeur positive inférieure à la valeur maximale locale positive (M1) comme première valeur seuil (T1) , et une valeur négative supérieure à la valeur minimale locale négative (M2) comme deuxième valeur seuil (T2), un moment auquel la densité de flux magnétique détectée par le capteur magnétique (12) dépasse ou tombe en dessous de la première valeur seuil (T1) comme l'un parmi un point de départ ou un point final, un moment auquel la densité de flux magnétique détectée par le capteur magnétique (12) dépasse ou tombe en dessous de la deuxième valeur seuil (T2) comme un autre parmi le point de départ ou le point final, et le capteur de temps de mouvement de vérin hydraulique (10) mesure un temps entre le point de départ et le point final.

2. Vérin hydraulique selon la revendication 1, dans lequel le capteur de temps de mouvement de vérin hydraulique (10) est configuré de telle façon que lorsque le piston (16) est déplacé d'une position de point de départ spécifiée vers une position de point final spécifiée, la densité de flux magnétique détectée à la position de point de départ spécifiée est définie comme étant l'une parmi la première valeur seuil (T1) ou la deuxième valeur seuil (T2), la densité de flux magnétique détectée à la position de point final spécifiée est définie comme étant une autre parmi la première valeur seuil (T1) ou la deuxième valeur seuil (T2), une condition de détermination pour le point de départ est fixée en fonction de si la densité de flux magnétique est augmentée ou diminuée immédiatement après que le piston (16) s'est éloigné de la position de point de départ spécifiée, et une condition de détermination pour le point final est fixée en fonction de si le piston (16) a atteint la position de point final spécifiée pendant que la densité de flux magnétique augmente ou de si le piston (16) a atteint la position de point final spécifiée pendant que la densité de flux magnétique diminue.

3. Vérin hydraulique selon la revendication 1, dans lequel le capteur de temps de mouvement de vérin hydraulique (10) est configuré pour calculer une vitesse de piston par multiplication d'une réciproque du temps mesuré entre le point de départ et le point final par une constante correspondant à une distance entre une position de point de départ et une position de point final.

4. Vérin hydraulique selon la revendication 3, dans lequel le capteur de temps de mouvement de vérin hydraulique (10) est configuré pour calculer la vitesse de piston pour une pluralité de segments continus.
